# EUROPEAN PATENT APPLICATION

(11) **EP 1 445 917 A2**
(43) Date of publication of application: **11.08.2004**
(21) Application number: 04468004.9
(22) Date of filing: 04.02.2004
(51) Int. Cl.: H04L 29/06, G06F 1/00, H04Q 7/38

(54) **Identification system for admission into protected area by means of an additional password**

(30) Priority: 04.02.2003 SI 200300031
(71) Applicant: RenderSpace - Pristop Interactive d.o.o., 1000 Ljubljana (SI); Adacta Programska Oprema D.O.O., 1000 Ljubljana (SI)
(72) Inventor: Kuclar, Ales, 1355 Polhov Gradec (SI); Klipsteter, Matjaz, 1000 Ljubljana (SI)
(74) Representative: Flak, Antonija

(57) **Abstract**

The identification system for admission into protected area according to the invention solves the problem of secure access to computer networks, whereby the said system uses an additional key for admission, to applications or user programs, to web sites on internet or intranet, and as additional lock beside conventional security devices for restricted premises.

The essential feature of the identification system according to the invention is in that the user (1) supplies beside his/her regular username and password an additional, randomly generated password (8), which is sent to his/her mobile phone (9) number by the identification system in the form of an SMS message (8) after the identification systems receives the regular username and password from the user. Additional security is ensured by time-limited usability of the said SMS key and by limited repetition of access attempts.

## Description

### FIELD OF THE INVENTION

The invention relates in general to electronic security systems with personal identity verification. In particular, the invention relates to personal identification systems including additional computer generated protection means.

### TECHNICAL PROBLEM

The technical problem solved by the present invention is to design an identification system allowing access to protected content, which may be either electronic or physical, only to authorized persons, who shall identify themselves by their mobile phone and by additional criteria based on mobile telephone system and on a computer algorithm.

### BACKGROUND TO THE DISCLOSURE

Various authentication systems are known, providing controlled access to protected contents or premises. With the secure sockets layer protocol (SSL), the steps for opening access to a secure system are as follows: Upon the request of a user, the server sends its public key along with its certificate. The user checks the validity of the certificate and transmits to the server, if the certificate is valid, a random symmetric encryption key, encrypted with the public key, and other necessary data. The server decrypts the symmetric encryption key using its private key and uses the symmetric key also to decrypt other data. Depending on the agreement of said data elements, the access to secure system is enabled or denied to the user.

Smart cards are also widely used for access control. With an identity card or an access control card, the user operates a small electronic device, which includes a keypad and a display. To gain access to a system, the user types in beside his/her username and password also a special password, which is generated by the device after the user enters his/her PIN code.

Some user identification systems require supplementary devices, e.g. fingerprints reader, temporary password generator or the like for additional personal identification.

### DESCRIPTION OF THE INVENTION

The essential feature of the identification system for admission into protected area according to the invention is in supplying to the system beside user's regular username and password also an additional, randomly generated password, which is sent by the identification system to user's mobile phone number in the form of an SMS message after the identification systems receives the regular username and password from the user. Additional security is ensured by time-limited applicability of the said SMS key and also by limited repetition of access attempts.

The identification system according to the invention is intended:
- for access to a computer network, whereby the said system acts as an additional key for admission;
- for access to applications or user programs;
- for access to web sites on internet or intranet;
- as additional lock beside conventional security devices for restricted premises.

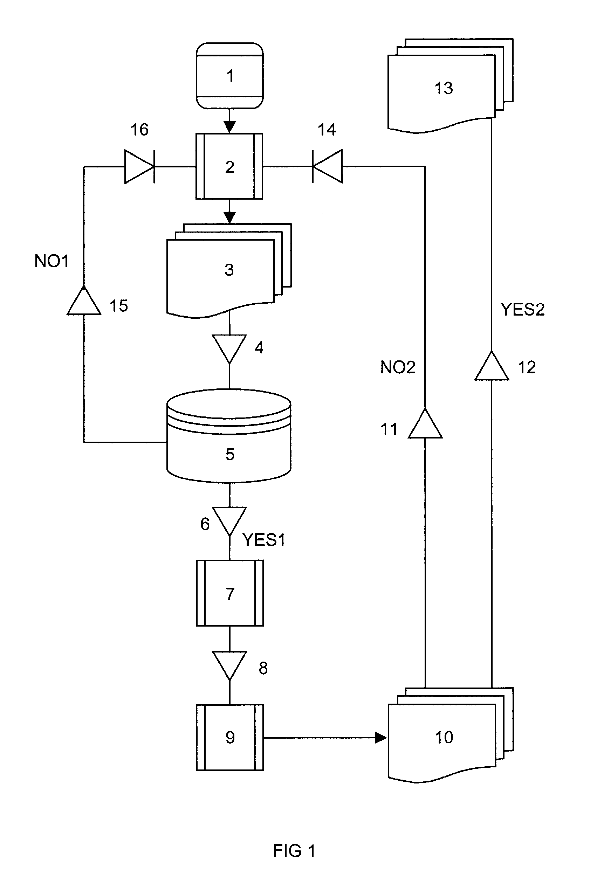

The identification system according to the invention is explained in detail by means of Figure 1 showing a block diagram of the system.

A user 1 initiates the identification procedure by opening through a communicator 2 a window 3 intended for the input of the username and password. A module 4 conveys the said two input keys to a database 5 of registered users. If the username and password are incorrect, a module 15 passes on a signal NO1 through a module 16 to the communicator 2 requesting a repetition of the initial access step. The module 16 allows yet another repetition of access to the communicator 2, which consequently opens the window 3 for the third and the last time. If the username and password are incorrect also at the third attempt, the module 16 blocks the access to the communicator 2.

When the username and password are correct, a module 6 passes on a signal YES1 to a GSM module 7, which sends a randomly generated SMS password 8 to a mobile phone 9 of the user 1, who types the received SMS password 8 into a window 10. At this point a time interval starts to run, which is written in the window 10 and is set accordingly to limit the applicability of the SMS password 8. If the user does not enter the SMS password 8 correctly, a module 11 passes on a signal NO2 through a module 14 to the communicator 2 as a command to open the window 3 so that the username and password can be entered again. The module 14 allows one more repetition of the access to the communicator 2, which opens the window 3 so that the username and password can be typed in again. When the user 1 enters the correct SMS password 8 into the window 10, a module 12 passes on a signal YES2 to a module 13, which opens the access to the protected content.

The identification system according to the invention ensures a reliable opening of access to a secure content or area, provided that the criteria for access as described above are met, i.e. that the username, the password and the random SMS password 8 are entered correctly. If all three identification criteria are not fulfilled, the access to the communicator 2 is closed. Besides, the user must apply for a new username and password with the manager of the secure content.

The security measures of the identification system according to the invention are multifaceted. The user has three permanently assigned access criteria, i.e. the username, the password and the number of his/her mobile phone, and a fourth access criterion, which is a randomly generated password, sent to his/her mobile phone as an SMS message. Furthermore, the reliability of the system is enhanced by time-limited applicability of the random password. Besides, the requirements for access can be adjusted to suite the importance of the secure content by altering the number of repetitions allowed for the input of the username and the password.

The identification system according to the invention represents an improvement of the existing security systems and can be applied with all electronic security systems, which include personal identification. The essential feature of the system is in sending an additional password, needed for access to various secure contents such as information systems, applications, computer networks, and similar, to the user via an SMS message. The identification system according to the invention can be applied for securing the access to electronic content as well as to secure premises such as private residences, banks, offices, schools and similar. The mobile phones used for the communication with users for additional security identification have a great advantage as compared to other identification devices because they are widespread and feature a high degree of mobility, so the desired secure content can be accessed from different locations.

The advantage of the identification system according to the invention is in that every time a new randomly generated password is sent by means of an SMS message to the user's mobile phone. In this way, the possibility for the third person to access the secure system by using only the username and password of the registered user is eliminated. Namely, due to various reasons, usernames and passwords are not secured with enough care. The additional password, which is randomly generated exclusively upon the request of the user, which is sent only to his/her mobile phone, and which has a time-limited validity, ensures a high degree of protection for the secure content, for which the access is requested.

In case of an attempt by a third person to access the secure system by using the username and password of a registered user, the owner of this username and password is informed with an SMS message that somebody tried to access a secure system with his/her username and password. This feature represents an additional protection of access to a secure system, as the system administrator has the possibility to intervene promptly.

Another advantage of the identification system according to the invention is in that in case of more than three unsuccessful attempts to enter into the secure system, further attempts are prevented for a certain time period and adequate notes are sent to the system administrator and to the owner of the registered username and password.

The identification system according to the invention enables additional limitations of access to secure content for a certain time period, e.g. for working hours only, and allows different adjustments for individual users.

## Claims

1. An identification system for admission into protected area, which operates via the on-line network and a mobile telephone system and uses three personal identification criteria of the authorized user of the restricted area, namely the username and the password, assigned to the authorized user by the manager of the secure area, and the number of the user's mobile phone, **characterized in that** the user (1) initiates the identification procedure by opening through a communicator (2) a window (3) and by typing in his/her username and password, which are conveyed by module (4) to a database (5) of registered users; that in case of incorrect username and password a module (15) passes on a signal (NO1) through a module (16) to the communicator (2) requesting a repetition of the initial access step; that the module (16) allows yet another repetition of access to the communicator 2, so when the username and password are entered incorrectly for the third time, the module (16) blocks the access to the communicator (2); that in case of correct username and password a module (6) passes on a signal (YES1) to a GSM module (7), which sends a randomly generated SMS password (8) to a mobile phone (9) of the user (1), who types the received SMS password (8) into a window (10), and that at this point a time interval starts to run, which is written in the window (10) and is set accordingly to limit the applicability of the SMS password (8); that if the user does not enter the SMS password (8) correctly, a module (11) passes on a signal (NO2) through a module (14) to the communicator (2) as a command to open the window (3) so that the username and password can be typed in again; that the module (14) allows yet another repetition of the access to the communicator (2), which opens the window (3) so that the username and password can be typed in once again; that when the user (1) enters the correct SMS password (8) into the window (10), a module (12) passes on a signal (YES2) to a module (13), which opens the access to the protected content; that in case that any of three identification criteria, i.e. username, password and random SMS password (8), is not fulfilled, the access to the communicator (2) is closed and the user must apply with the manager of the secure content for a new username and password, which will be stored in the identification system together with the user's mobile phone number.

2. The identification system according to claim 1, wherein the reliability of the authorized access to secure area is enhanced by time-limited applicability of the SMS password (8).

3. The identification system according to claims 1 and 2, wherein the number of repetitions for opening the window (3), in which the user (1) types in his/her username and password, can be adjusted in module (14) and in module (16).

4. The identification system according to claims 1 and 3, **characterized in that** the identification system is applicable for access to a computer network, whereby the said system acts as an additional key for admission, for access to applications or user programs, for access to web sites on internet or intranet, and as additional lock beside conventional security devices for restricted premises.
